Europäisches Patentamt

European Patent Office

Office européen des brevets

(11) Publication number: **0 153 882**
**B1**

(12) **EUROPEAN PATENT SPECIFICATION**

(45) Date of publication of patent specification: **14.06.89**

(21) Application number: **85301474.4**

(22) Date of filing: **04.03.85**

(51) Int. Cl.⁴: **F 16 D 57/00, F 16 D 57/04**

(54) Hydraulic brake.

(30) Priority: **02.03.84 JP 38655/84**
**02.03.84 JP 38656/84**

(43) Date of publication of application:
**04.09.85 Bulletin 85/36**

(45) Publication of the grant of the patent:
**14.06.89 Bulletin 89/24**

(84) Designated Contracting States:
**AT DE FR GB IT NL SE**

(56) References cited:
**DE-A-2 507 118**
**DE-A-2 811 171**
**US-A-3 958 671**

(73) Proprietor: **EBARA CORPORATION**
**11-1, Haneda Asahi-cho**
**Ota-ku Tokyo, 144 (JP)**

(72) Inventor: **Koizumi, Tadashi**
**1079-22 Shirane-cho Asahi-ku**
**Yokohama-shi Kanagawa-ken (JP)**
Inventor: **Otake, Shigeru**
**Hai Iaku Yokohama Hakusan 207 220-2,**
**Hakusan-cho**
**Midori-ku Yokohama-shi Kanagawa-ken (JP)**

(74) Representative: **Spall, Christopher John et al**
**BARKER, BRETTELL & DUNCAN 138 Hagley**
**Road**
**Edgbaston Birmingham B16 9PW (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a hydraulic brake in accordance with the preamble of Claim 1.

In general, a water wheel or a wind mill is employed to utilise and recover fluid energy in order to provide power to a load. When the magnitude of the load varies, the rotational speed of the water wheel or wind mill is affected. For instance, when the magnitude of the load is decreased, the water wheel or wind mill is rotated faster because the flowing energy is usually unchanged over a certain period. Therefore, it has been necessary to control, limit or maintain such rotational speed of the water wheel or wind mill to allow for cases when the magnitude of the load varies. To such end, a flow control valve accompanied by a regulating means has been disposed upstream of the wheel. (Hereinafter, the term "wheel" is employed for convenience to mean a water wheel or wind mill). The regulating means comprises, for example, an actuator for actuating the flow control valve and a sensor sensing the rotational speed so as to determine the degree of required operation by the actuator, and such regulating means has been of a relatively large size which has made it expensive and has required a large space for installation.

An hydraulic brake in accordance with the preamble of Claim 1 is known from US—A— 3 958 671 in which the supply of operating fluid forms in a reservoir an annulus which will develop only when the rotational speed of the rotatable impeller is sufficient to render the brake operative. The impeller portion can receive such fluid from the reservoir only when the pressure in the radially innermost portion of the interior of the reservoir increases in response to admission of compressed air.

According to our invention in an hydraulic brake in accordance with the preamble of Claim 1, the means for controlling the volume of said operating liquid within said impeller portion varies said volume in response to variations in the rotational speed of said shaft, and said means comprises

an outer flange associated with said rotatable impeller so as to be rotatable with said impeller, said flange being provided with an annular groove (3) for retaining a ring of fluid formed by centrifugal force;

a fluid conduit communicating said ring of fluid with said impeller portion;

a fluid discharge port means in said impeller portion; and

a valve responsive to the rotational speed of said shaft and disposed in said fluid conduit.

Therefore, if the rotational impeller is rotated with the presence of hydraulic fluid between the impellers, an hydraulic torque is generated and, thus, a braking force is applied to the rotation of the rotatable impeller.

The braking force of the above construction naturally depends on the volume of the fluid contained within the impeller portion and, therefore, the braking force is capable of being regulated by controlling the amount of fluid fed into the impeller portion. Since the regulation of the fluid being fed is arranged so that fluid is not supplied to the impeller portion until the rotational speed reaches a predetermined level no braking force is generated during the operation of a wheel which is rotated under the predetermined level of speed, and the braking force is produced as the rotational speed is increased beyond the predetermined level.

The hydraulic brake can be used in a water-wheel apparatus for recovering fluid energy disposed in a fluid stream and mounted on a rotatable shaft.

The present invention will become clear when the detailed description is reviewed in conjunction with the accompanying drawings, a brief explanation of which is summarised below.

Figure 1 is a graph showing the relationship in the hydraulic brake between the braking power and the amount of fluid in the impeller portion;

Figure 2 is a cross sectional view of a first embodiment according to the present invention;

Figure 3 is a graph illustrating the power curves of the hydraulic brake according to the present invention relative to the rotational speed;

Fig. 4 shows a second embodiment of the hydraulic brake according to the present invention; and

Fig. 5 shows a water wheel apparatus incorporating the hydraulic brake shown in Fig. 2.

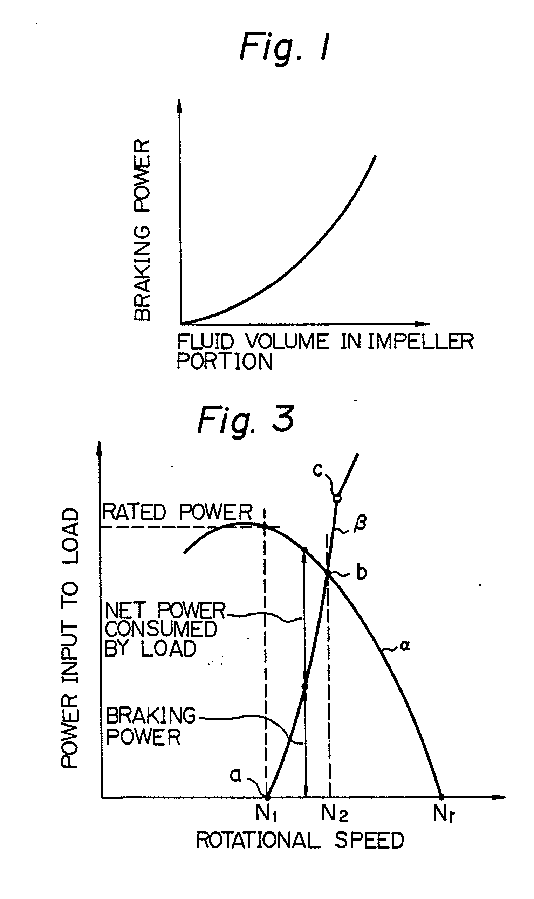

Before explaining the embodiments of the present invention, the relationship between the amount of fluid within the impeller portion and the braking force is briefly touched upon. Such relationship is illustrated in Fig. 1 and the curve shown therein is represented by the equation

$$P = KN^3D^5$$

in which
P: braking force
N: rotational speed (number of revolutions per minute)
D: diameter of impeller
K: constant depending on fluid volume within impeller portion.

Accordingly, if the fluid volume is varied, the constant K is changed so that the braking force P is regulated. The present invention relies on the phenomenon described above.

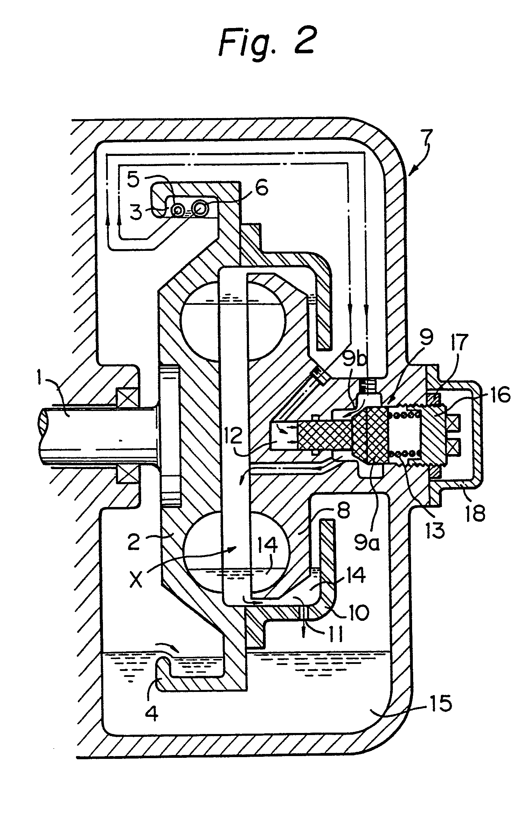

Reference is now made to Fig. 2 wherein an embodiment of a hydraulic brake according to the present invention is schematically illustrated in a cross section. A rotatable shaft 1 adapted to be driven by the wheel has attached at the end thereof a rotatable impeller 2. A stationary impeller 8 is stationarily mounted on the inner-side wall of a housing 7 in opposing relation to the rotatable impeller 2 so as to compose a main part "X" of the hydraulic brake similar, in construction, to a so-called hydraulic coupling. For convenience, the main part is hereinafter referred to as an impeller portion "X". The housing 7 includes a portion 15 which serves as an oil sump. The rotatable impeller 2 comprises a peripheral flange 4 at the outer peripheral portion thereof and the flange 4 is so configured as to form an annular groove 3 in which an oil or fluid ring is produced by a centrifugal force when the impeller 2 is driven to rotate while immersing the flange 4 partially in the oil at the sump 15. Also, a rotor casing 10 is attached to the rotatable impeller 2 so as to enclose the stationary impeller 8 therein without interfering with the relative rotation therebetween. A flow control valve 9 is disposed in the housing 7 and is adapted to regulate the amount of oil 14 in the impeller portion "X" of the hydraulic brake. The oil 14 used for braking is introduced into the impeller portion "X" by means of a scoop tube 6 through the valve 9. A valve body 9a of the valve 9 is normally urged to close the valve by a spring 13. Also, the valve body 9a is adapted to receive a hydraulic pressure from a rear chamber 12 at the side opposite the spring 13. The rear chamber 12 is coupled with the oil ring in the flange groove 3 through a scoop tube 5 supplied with a pressurized oil from the oil ring formed within the groove 3, the pressure being generated by the centrifugal force cause by the rotation. Therefore, the position of the valve body 9a is determined by the spring 13 and the hydraulic pressure in the rear chamber 12 derived from the rotation of the flange groove 3. In addition to the valve 9, a discharge port or ports 11 are provided in the peripheral wall of the rotor casing 10. The amount of oil 14 in the impeller portion is, thus, regulated by the valve 9 and the discharge port (or ports) 11 and this amount determines the magnitude of the braking force. The spring 13 is adjustable by an adjusting head 16 threadably engaged in the valve 9 so as to set the pressure valve in the chamber 12 for commencement of the opening of the valve 9 or movement of the valve body 9a away from a valve seat 9b. The head 16 is fixed in place by a lock nut 17 after the adjustment and is covered by a cap 18.

In operation, when the revolutional speed of the shaft 1 is varied, the pressure in the fluid taken out from the groove 3 through the scoop tube 5 also varies. If the spring 13 has been adjusted so as to be stronger than a certain predetermined pressure in the rear chamber 12, the valve 9 will be kept closed until the pressure in the rear chamber 12 reaches the predetermined pressure whereby the oil 14 in the impeller portion "X" does not exist and, thus, no braking force is produced during the period in which the pressure in the rear chamber 12 is below the predetermined pressure. However, when the speed of the rotation of the shaft becomes faster so that the hydraulic pressure in the rear chamber 12 is raised higher than the predetermined pressure, the hydraulic pressure in the rear chamber 12 overcomes the force of the spring 13 to open the valve 9 whereby the fluid or oil is introduced as the oil 14 into the impeller portion "X" through the scoop tube 6. The amount of oil 14 introduced is stabilized after balancing the amount fed to the impeller portion through the scoop tube 6 and the value 9 and the amount discharged from the discharge port(s) 11 so that the braking force corresponding to the amount of oil 14 is applied to the shaft 3. As the rotational speed of the shaft becomes faster, the opening degree of the valve becomes larger. If the valve 9 is fully opened, the oil 14 within the impeller portion of the impellers 2 and 8 will completely fill the impeller portion. Further increase in the speed of the shaft will produce a higher braking force in proportion to the cubic multiplication of the rotational speed (number of revolutions per minute).

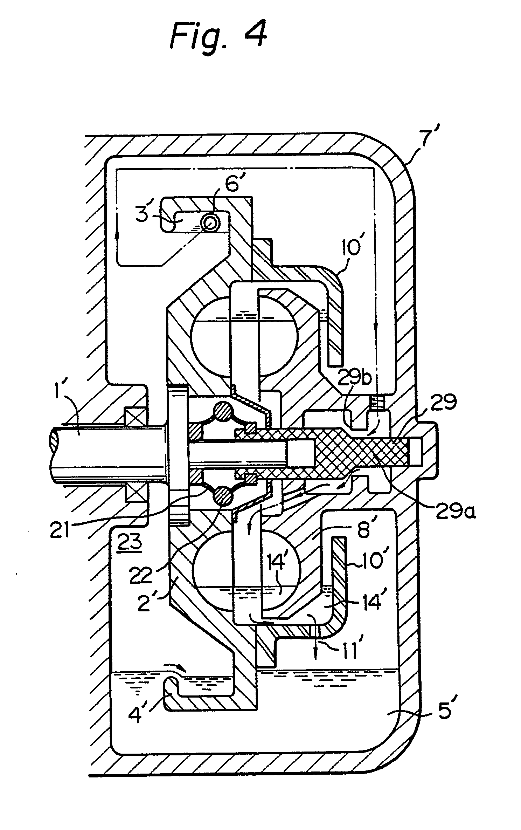

The operating condition of the hydraulic brake explained above is illustrated in Fig. 3 with respect to the relationship between the rotational speed, i.e. number of revolutions per minute (in abscissa) and the braking power applied to the rotatable shaft (in ordinate) in a case where the hydraulic brake is directly coupled to the rotatable shaft of the wheel.

In general, in the water wheel or wind mill, the rotational speed varies as the input to the load varies and such relationship is shown in Fig. 3 as represented by the curve "α" provided that the water head or wind pressure is kept constant. Incidentally, in Fig. 3,

$N_1$: rotational speed (number of revolutions per minute) at the rated power;

$N_2$: rotational speed (number of revolutions per minute) where the net input power to the load becomes zero; and

$N_r$: rotational speed (number of revolutions per minute) without any restraint.

On the other hand, the performance curve of the hydraulic brake shown in Fig. 2 is illustrated as the curve "β" in Fig. 3. From this curve "β", it may be understood that the rotational speed (number of revolutions per minute) may be controlled for any power input to the load within a range between $N_1$ and $N_2$ wherein $N_1$ is as defined above (i.e. the number of revolutions per minute at the rated power) and $N_2$ is the number of revolutions where curves "α" and "β" intersect each other and the net input power to the load becomes zero. The point "c" on the curve "β" represents the condition in a case where the oil 14 completely fills the impeller portion. The vertical length between the curve "α" and "β" is the net power to be input to the load and the vertical length between the curve "β" and the abscissa corresponds to the braking power consumed in addition to the net power which actually drives the load.

In Fig. 4, another embodiment according to the present invention is illustrated in a cross section. In this drawing, parts or portions similar to those of the embodiment shown in Fig. 2 are given the same respective references with prime, and the respective functions thereof are the same as those with the corresponding numerals without prime in Fig. 2. In this embodiment, a flow control valve 29 is employed in place of the valve 9 of the first embodiment. This valve 29 is actuated to control the opening degree by a weight governor 23 which is responsive to the rotational speed of the shaft 1'. The governor 23 comprises spring plates 21 and weights 22 and is coupled to a valve body 29a. The spring plates 21 serve to normally urge the valve body towards a valve seat 29b to thereby close the valve 29. In operation, as the rotational speed of the shaft 1' is increased, the weights 22 are caused to move radially outwardly so as to move the coupled valve body 29a away from the valve seat 29b, thus opening the valve. By proper determination of the initial load on the plate springs 21, the rotational speed at which the valve commences its opening is pre-set.

Because of the presence of the valve 29 accompanied by the weight governor just explained above, there is no necessity in the second embodiment to have a scoop tube similar to the scoop tube 5 shown in the first embodiment.

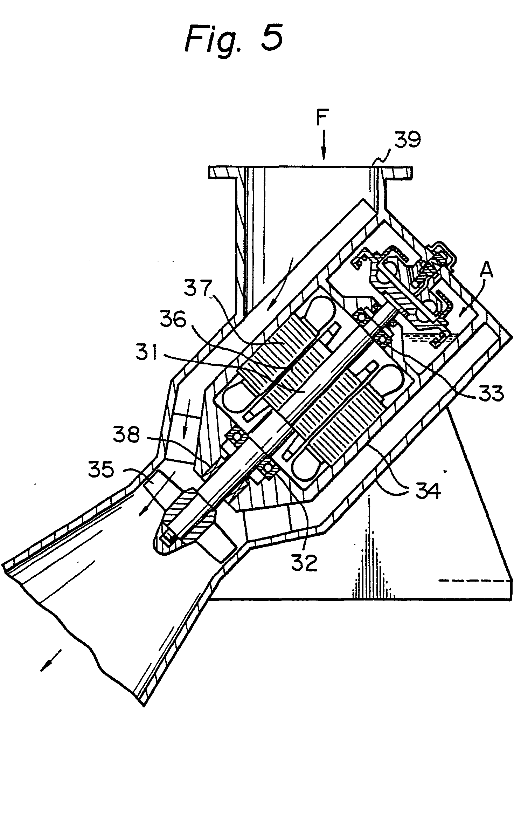

Referring now to Fig. 5, there is shown a hydraulic generator associated with a hydraulic brake according to the present invention. The hydraulic brake incorporated in this example is designated as "A" in Fig. 5 and it corresponds to the first embodiment illustrated in Fig. 2.

A shaft 31 is rotatably supported by bearings 32 and 33 which are installed in a housing 34. At the lower end of the shaft 31, a water wheel 35 is secured and, at the upper end thereof, the hydraulic brake "A" is coupled. Between the bearings 32 and 33, a rotor 36 of the generator is mounted on the shaft 31 and a stator 37 of the generator is secured in the housing 34 in opposing relation to the rotor 36. A sealing means such as a mechanical seal 38 is disposed around the shaft 31 between the rotor 36 and the water wheel 35.

In the arrangement shown in Fig. 5, water flow is introduced into the housing 34 through an intake 39 in the direction indicated by an arrow "F" and such water flow causes the water wheel 35 to rotate, whereby generating electric power. In this instance, the hydraulic brake "A" controls the rotation of the shaft 31 as explained in connection with Figs. 2, 3 and 4. The control of the hydraulic brake "A" is effected in response to variations in the load. Also, the brake "A" serves to control the rotational speed of the shaft in case the head imposed on the water wheel 35 varies such as where the rotational speed increases as a result of variation of the head. Accordingly, a steady and stable operation of the hydraulic generator is achieved without the need for a complicated controller as has heretofore been required. Of course, a brake other than "A" such as that shown in Fig. 4, etc. may also be employed in Fig. 5.

Summarizing the above, according to the present invention the following have been realized:

(1) a braking force is able to be changed over within a certain and relatively wide range of rotational speeds;

(2) construction of the brake is made simple and any extra power source or signal is not required for generating the braking force;

(3) no sliding portion or contact portion is required whereby a long endurance life and steady operation are expectable; and

(4) the control point where the braking force is to be initially applied is easily pre-set so that no braking force is applied until the rotational speed reaches the pre-set value.

In the embodiments illustrated, the volume of the fluid within the impellers portion is regulated by the pressure in response to the rotational speed, control of such volume may also be effected by shifting the position of the inlet port of the scoop tube directly in response to a change in the centrifugal force so that the volume of fluid within the impeller portion may be varied from zero to an amount corresponding to the point "b" in Fig. 2.

## Claims

1. An hydraulic brake adapted to apply a braking force to a rotating shaft (1) when the rotational speed is increased beyond a predetermined value, in which said brake comprises

a rotatable impeller (2) mounted on said shaft;

a stationary impeller (8) disposed opposite said rotatable impeller to constitute an impeller portion (X) which is adapted to retain an operating fluid therein; and

a means for controlling the volume of said operating fluid within said impeller portion, characterised in that said means for controlling the volume of operating fluid varies said volume in response to variations in the rotational speed of said shaft (1), and said means comprises

an outer flange (4) associated with said rotatable impeller (2) so as to be rotatable with said impeller, said flange being provided with an annular groove (3) for retaining a ring of fluid formed by centrifugal force;

a fluid conduit (6) communicating said ring of fluid with said impeller portion (X);

a fluid discharge port means (11) in said impeller portion (X); and

a valve (9) responsive to the rotational speed of said shaft and disposed in said fluid conduit.

2. An hydraulic brake as claimed in claim 1 characterized in that said valve comprises a valve body (9a) normally urged toward a valve seat by a spring means (13) such as to close the valve until the rotational speed of said shaft reaches a predermined value which is pre-set by adjusting said spring means.

3. An hydraulic brake as claimed in claim 2 characterized in that said valve body (9a) is adapted to receive a hydraulic pressure from said ring of fluid so as to be urged against said spring means thereby varying the opening degree of said valve as the rotational speed of said shaft increases beyond said predetermined value.

4. An hydraulic brake as claimed in claim 2 characterized in that said valve body (29a) is coupled with a governor (23) including said spring means, said governor retracting said valve body (29a) from the valve seat (29b) in response to an increase in the rotational speed of said shaft.

5. The use of the hydraulic brake according to the foregoing claims in a water-wheel apparatus (35) for recovering fluid energy disposed in a fluid stream and mounted on a rotatable shaft (31).

## Patentansprüche

1. Hydraulische Bremse geeignet zum Anlegen einer Bremskraft an eine Drehwelle (1), wenn die Drehzahl über einen vorbestimmten Wert hinaus erhöht wird, wobei die Bremse folgendes aufweist:

ein auf der Welle angeordnetes drehbares Flügelrad (2);

ein entgegengesetzt zu dem drehbaren Flügelrad angeordnetes stationäres Flügelrad (8) zur Bildung eines Flügelradteils (X), der geeignet ist ein Betriebsströmungsmittel darin zu halten; und

Mittel zur Steuerung des Volumens des Betriebsströmungsmittels innerhalb des Flügelradteils dadurch gekennzeichnet, daß die Mittel zur Steuerung des Volumens des Betriebsströmungsmittels das Volumen verändern, und zwar infolge von Änderungen der Drehzahl der Welle (1), und daß die Mittel folgendes aufweisen:

einen Außenflansch (4) derart mit dem drehbaren Flügelrad (2) assoziiert, daß er mit dem Flügelrad drehbar ist, wobei der Flansch mit einer Ringnut (3) versehen ist um einen Ringausströmungsmittel gebildet durch die Zentrifugalkraft zu halten,

eine Strömungsmittelleitung (6) zur Verbindung des Strömungsmittelrings mit dem Flügelradteil (X),

Strömungsmittelablaßöffnungsmittel (L) in dem Flügelradteil (X), und

ein Ventil (9), welches auf die Drehzahl der Welle anspricht und in der Strömungsmittelleitung angeordnet ist.

2. Hydraulische Bremse nach Anspruch 1, dadurch gekennzeichnet, daß das Ventil einen Ventilkörper (9a) aufweist, der normalerweise gegen den Ventilsitz durch Federmittel (13) gedrückt wird um so das Ventil zu schließen bis die Drehzahl der Welle einen vorbestimmten Wert erreicht, der durch Einstellung der Federmittel voreingestellt ist.

3. Hydraulische Bremse nach Anspruch 2, dadurch gekennzeichnet, daß der Ventikörper (9a) zur Aufnahme eines hydraulischen Drucks von dem Strömungsmittelring geeignet ist, um so gegen die Federmittel gedrückt zu werden, wodurch das Öffnungsausmaß des Ventils verändert wird, wenn die Drehzahl der Welle über den vorbestimmten Wert ansteigt.

4. Hydraulische Bremse nach Anspruch 2, dadurch gekennzeichnet, daß der Ventilkörper (29a) mit einem Regler (23) gekuppelt ist, der die Federmittel aufweist, wobei der Regler den Ventilkörper (29a) vom Ventilsitz (29b) infolge einer Erhöhung der Drehzahl der Welle zurückzieht.

5. Verwendung der hydraulischen Bremse nach den vorhergehenden Ansprüchen einer Wasseradvorrichtung (35) zur Wiedergewinnung von Strömungsmittelenergie angeordnet in einem Strömungsmittelstrom und angeordnet auf einer drehbaren Welle (31).

## Revendications

1. Frein hydraulique adapté pour appliquer une force de freinage à un arbre rotatif (1) lorsque la vitesse de rotation dépasse une valeur prédéterminée, dans lequel le frein comporte:
—un rotor (2) monté sur l'arbre;
—un stator (8) disposé en vis-à-vis du rotor pour délimiter une partie de couplage (X) qui est adaptée pour retenir un fluide de fonctionnement; et
—des moyens pour commander le volume dudit fluide de fonctionnement dans la partie de couplage, caractérisé en ce que lesdits moyens de commande du volume de liquide de fonctionnement font varier le volume en réponse à des variations de la vitesse de rotation de l'arbre (1) et lesdits moyens comportent;
—une collerette extérieure (4) associée au rotor (2) de manière à être rotative avec le rotor, la collerette étant pourvue d'une gorge annulaire (3) destinée à retenir un anneau de fluide formé par la force centrifuge;
—un conduit de fluide (6) mettant en communication l'anneau de fluide avec la partie de couplage;
—des moyens (11) formant orifice de décharge de fluide de la partie de couplage; et
—une soupape (9) sensible à la vitesse de rotation de l'arbre et disposée dans ledit conduit de fluide.

2. Frein hydraulique selon la revendication 1, caractérisé en ce que la soupape comporte un corps de soupape (9a) normalement repoussé vers un siège de soupape par des moyens élastiques (13) de manière à fermer la soupape jusqu'à ce que la vitesse de rotation de l'arbre atteigne une valeur prédéterminée, qui est préétablie par réglage des moyens élastiques.

3. Frein hydraulique selon la revendication 2, caractérisé en ce que le corps de soupape (9a) est adapté pour recevoir une pression hydraulique à partir de l'anneau de fluide de façon à être poussé à l'encontre des moyens élastiques, faisant varier ainsi le degré d'ouverture de la soupape lorsque la vitesse de rotation de l'arbre dépasse ladite valeur prédéterminée.

4. Frein hydraulique selon la revendication 2, caractérisé en ce que le corps de soupape (29a) est accouplé à un régulateur (23) comprenant lesdits moyens élastiques, le régulateur dégageant le corps de soupape (29a) du siège de soupape (29b) en réponse à un accroissement de la vitesse de rotation de l'arbre.

5. Utilisation du frein hydraulique selon l'une quelconque des revendications précédentes dans un appareil (35) à roue hydraulique destiné à récupérer l'énergie d'un fluide, disposé dans un courant de fluide et monté sur un arbre rotatif (31).

# Fig. 1

# Fig. 3

1

# Fig. 2

EP 0 153 882 B1

# Fig. 4

# Fig. 5